# EUROPEAN PATENT SPECIFICATION

(11) **EP 2 025 163 B1**
(45) Date of publication and mention of the grant of the patent: **16.05.2018**
(21) Application number: 06803771.2
(22) Date of filing: 18.09.2006
(51) Int. Cl.: H04L 29/08, H04L 29/06, H04L 12/18

(54) **A SCALABLE UNIFIED FRAMEWORK FOR MESSAGING USING MULTICAST AND UNICAST METHODS**
SKALIERBARER VEREINIGTER RAHMEN ZUR NACHRICHTENÜBERMITTLUNG UNTER VERWENDUNG VON MULTICAST- UND UNICAST-VERFAHREN
UN CADRE D'APPLICATIONS UNIFIE EXTENSIBLE POUR UNE MESSAGERIE ELECTRONIQUE UTILISANT DES PROCEDES DE MULTIDIFFUSION ET D'ENVOI INDIVIDUEL

(30) Priority: 19.05.2006 US 801781 P
(43) Date of publication of application: 18.02.2009
(73) Proprietor: Nokia Solutions and Networks GmbH & Co. KG, 81541 Munich (DE)
(72) Inventor: ANNAPUREDY, Satish, Woodinville, WA 98072 (US); DE LAET, Stefan, Bothell, WA 98011 (US)
(74) Representative: Weidel, Gottfried
(86) International application number: PCT/US2006/036251
(87) International publication number: WO 2007/136400

(56) References cited:
- WO-A2-01/99370
- US-A1- 2003 063 608
- US-A1- 2004 045 036
- US-A1- 2005 100 016
- US-B1- 6 189 039

## Description

### CROSS REFERENCE TO RELATED APPLICATIONS

This application claims priority from U.S. Provisional Application Serial No. 60/801,781, filed May 19, 2006.

### BACKGROUND OF THE INVENTION

### Field of the Invention

This invention relates to Internet Protocol television (IPTV) systems. More particularly, the invention relates to systems and methods for messaging using multicast and unicast methods in an IPTV system.

### Description of the Related Art

Internet Protocol television (IPTV) systems are often concerned with the distribution of messages to clients. In some systems, a multicast approach is taken. In multicast, a sender sends a single copy of a file or other content to selected multiple recipients who have joined a multicast group. Multicast packets are replicated in the network by multicast enabled routers. **The document** US-B1-6 189 039 **(HARVEY JOHN PAUL [US] ET AL) 13 February 2001 (2001-02-13) describes a method and system for selective tunneling of streaming data from a server to a client in a computer network having one or more network segments. The server has a tunneler utility, and the receiver has a receiver utility. The receiver utility first attempts to detect, if a given stream is available via IP multicast on the network segment supporting the client. If not, then the receiver utility issues a request for a IP unicast stream. This request is serviced by the tunneler utility.** US2003063608 discloses a mechanism to connect multiple device clusters via "tunneling" of multicast messages inside point-to-point (or unicast) messages exchanged between Extended Discovery Servers. The result is that devices and applications in separate clusters, residing at locations remote from each other and connected through these servers, can discover and control each other. This extends the scope of discovery protocols via multicast tunneling and reference translation: a search message or an announcement message on a multicast channel in one domain gets encapsulated into a unicast message that is sent to a second domain. The multicast message is extracted from the unicast message in the second domain and is input to the second domain's multicast channel.

However, in some IPTV systems, multicast is not very reliable or may be unavailable. For instance, in some DSL based IPTV implementations, there may not be enough virtual circuits (VCs) to support any multicast file carousels. In these cases, all the available virtual circuits are dedicated for television channels or for video-on-demand (VOD) movies.

### SUMMARY OF THE INVENTION

The invention is defined by the claims.

### BRIEF DESCRIPTION OF THE DRAWINGS

The present invention may be better understood, and its numerous objects, features, and advantages made apparent to those skilled in the art by referencing the accompanying drawings. The use of the same reference symbols in different drawings indicates similar or identical items.
FIG. 1 illustrates an exemplary system according to an embodiment of the present invention.
FIG. 2 is a flowchart illustrating operation of an embodiment of the present invention.
FIG. 3A and FIG. 3B are a flowcharts illustrating operation of embodiments of the present invention.
FIG. 4A - FIG. 4C illustrate exemplary client, announcement, and linkage tables for use with a system in accordance with embodiments of the present invention.
FIG. 5A-FIG. 5B illustrate an exemplary media distribution system that may be used in with a personal video recorder system according to embodiments of the present invention.
FIG. 6A- FIG. 6B is a diagrammatic representation of a device and system that may be used to implement methods according to embodiments of the present invention.

### DETAILED DESCRIPTION OF EMBODIMENTS OF THE INVENTION

Embodiments of the present invention relate to a messaging framework in an Internet Protocol television (IPTV) system that allow applications to send messages using unicast or multicast transport. When using unicast transport, messages can be sent to a single receiving device or a set of receiving devices. When using multicast transport, messages are delivered to all reachable clients. Embodiments of the present invention support multicast messaging via group expressions that are evaluated on each receiving device.

According to some embodiments of the present invention, messages are transmitted in "announcements." Announcements can either completely embed the message, e.g., in the case of short messages or data carousel file streams, or refer to a message that is accessible separately as in, e.g., the case of advertisements that contain significant amounts of content.

Several types of messages can be provided. In some embodiments, these include messages about "events," such as files being streamed on the data carousel; operator-to-subscriber messages such as notification about service outages, bill payment reminders; commands to be executed on the receiving device; advertisements, etc. These messages may contain metadata descriptions of advertisements or notifications including the metadata. When event status or description changes, the corresponding messages are updated to reflect the changes.

If a message contains a file to download, the files can be made available on a multicast data carousel (MDC) for multicast download. Also, according to some embodiments of the present invention, a fallback unicast download location is provided. This allows a receiving device to fall back on unicast downloads in case multicast download fails. The unicast download location may be on the application repository, as will be explained in greater detail below. As will be explained in greater detail below, announcements can be pushed to the receiving devices using multicast or unicast push techniques or downloaded by the receiving devices using unicast poll-pull techniques. When using push techniques, the announcements are repeatedly sent to all the receiving devices as long as the corresponding event is active to increase the chances of delivery to all receiving devices. When unicast polling is enabled, the receiving devices poll a server-side messaging framework on a per receiving device basis to retrieve a list of new announcements since the last poll. They will then access the unicast download on the application repository.

When a receiving device processes an announcement, it validates the authenticity of the originating source and integrity of the announcement. In the case of multicast transport, if a group expression is included in the announcement, it is evaluated to determine whether the receiving device belongs to the group defined by the group expression. The announcement is then forwarded to listening applications that match certain metadata included in the announcement, such as category name and attributes.

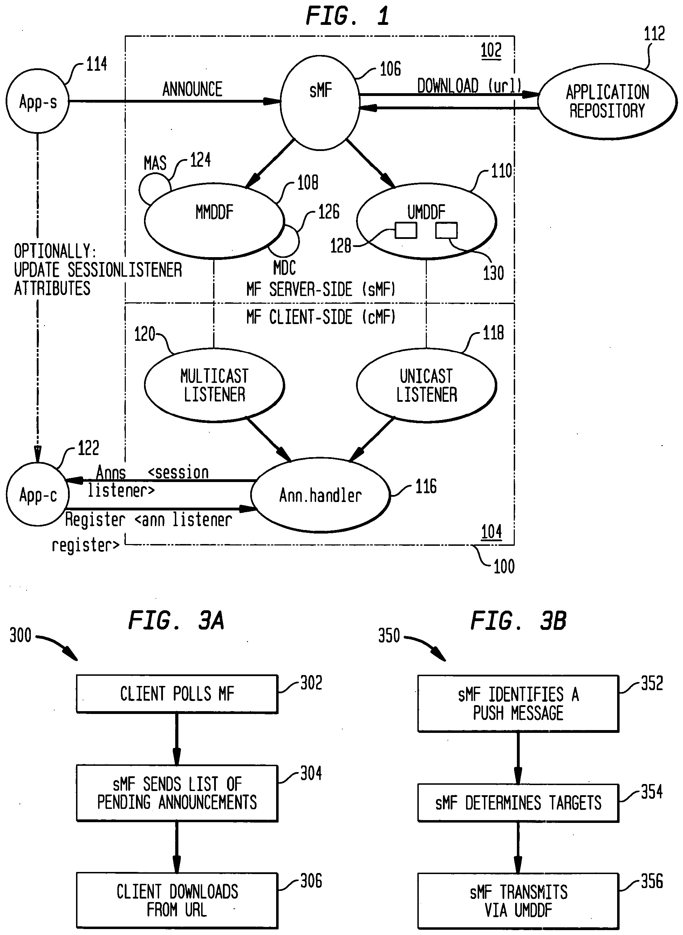

Turning now to the drawings and, with particular attention to FIG. 1, a diagram of a system in accordance with embodiments of the present invention and generally identified with the reference numeral 100 is shown.

The messaging framework system 100 includes a server side messaging framework (sMF) 102 and a client side messaging framework (cMF) 104. The sMF 102 provides interfaces to applications 114 to send announcements. The sMF 102 is coupled to an application repository 112 where files to download may be stored; and receives announcements from one or more server applications 114. The application repository 112 may also act as a hosting server to enable a unicast download.

In the embodiment illustrated, the server side messaging framework 102 includes an sMF controller 106, a multicast messaging framework server (MMDDF) 108 and a unicast messaging framework server (UMDDF) 110. It is noted that while shown separately, in practice, the servers, the control unit, the application and application repository may be integrated into the same unit or housing.

As will be explained in greater detail below, the MMDDF 108 implements a multicast announcement server (MAS) 124 and multicast data carousel (MDC) 126. The MAS 124 allows for multicast transmission of announcements, while the MDC 126 allows for multicast transmission of files by interleaving the files into a repeating pattern. The UMDDF 110 implements a polling mechanism 128 to allow receiving device clients to poll for new announcements and a push mechanism 130 to distribute announcements.

The cMF 104 provides interfaces to listeners on receiving devices to register interest in announcements and receive matching ones. The cMF 104 thus receives announcements and forwards them to interested client applications 122. The cMF 104 includes a multicast listener 120 and a unicast listener 118, which forward received announcements to an announcement handler 116, which communicates with the client application 122. The listeners 120, 118 may be any java object that implements appropriate interfaces. The cMF 104 and application 122 may be implemented on a receiving device such as a set top box or other device.

In operation, a server-side application 114 sends the sMF controller 106 an announcement. As discussed above, the announcement can include reference to a file for downloading, which can be accessed via the application repository 112. The sMF controller 106 may specify whether the announcement is to be sent via multicast or via unicast. In some embodiments, the sMF controller 106 will further specify whether the unicast should be a client polling and pulling technique, or a push technique. The transmission of the announcement is then handled by the MMDDF 108 or the UMDDF 110, depending on whether multicast or unicast is selected. Typically, a unicast technique is selected if a multicast is not available.

Announcements are uniquely identified by an announcement-id. The announcement-id may simply be a 32/64 bit number. In some embodiments, the announcement-id is used solely for the purpose of uniquely identifying an announcement and does not imply an order. Announcements may have an expiration time associated with them. In some embodiments, the messaging framework can specify a default configurable expiration time (e.g., 1 year). In some embodiments, for versioned content, every new version gets a new announcement-id.

In certain embodiments, multicast announcements are pushed over an IP multicast address. The session announcement protocol (SAP) may be used with Session Description Protocol (SDP) content (which may be extended by using extension attributes); SAP messages are sent by default on a predetermined IP address. The SDP content (session name, session id, and version) specifies event metadata. XML can be used for describing event metadata as well.

In some embodiments, the sMF 102 interfaces to request announcements are independent of the metadata. SAP/SDP may be used to describe the announcement in both the unicast and multicast cases. An application adds an announcement using a method referred to as an AddAnnouncement method. In order to allow the updating of the announcement, the AddAnnouncement method returns a "handle." This handle object has a generated UID that the server can use to map to a category, session-id, EventMetaData version, unicast/multicast call. This allows the server to check whether or not an update request is from the same client (app-s 114).

In certain embodiments, every announcement has an associated category. The cMF 104 listeners receive announcements by registering to a category. A category is uniquely identified by its name and version. Attributes are name-value pairs that describe events. A category is well-defined to prevent namespace collisions. Every category contains one reserved attribute "keyword" that should be used to include comma separated search-tags. Receiving devices can use these search tags in order to filter announcements.

A well-known category can be shared by multiple applications. The set of attributes of a well-known category cannot be modified. The sMF 102 defines a set of well-known categories that correspond to predetermined well-known uses, such as file, advertisement, command, notification, etc. An application is also allowed to define its own categories for private, non-shared use.

When the cMF 104 receives an announcement, it captures the event description into an EventMetaData object that includes a category name and attributes. It then forwards it to one or more applications that registered interest in that particular category.

As noted above, a multicast data carousel (MDC) 126 may be used to deliver files over multicast and can be used by a client to download files. In such a data carousel implementation 126, a file is divided into numbered blocks and the blocks are encapsulated in user datagram protocol (UDP) packets and sent using IP multicast. The receiving device 104 will reassemble the blocks either in memory or in persistent storage, verify the integrity of the reassembled file by calculating a file digest using a one-way hash function such as MD5, SHA-1 etc and comparing it with the file digest specified in the corresponding announcement.

In some embodiments, the receiving device acquires the download information for the multicast data carousel 126 based on the data carousel metadata inside an announcement. The metadata can contain the address, port, file block size, number of blocks, digest and digest algorithm. This information can be used by the cMF 104 to enable an application 122 to download a file into a datasink. (A datasink can be, e.g., a file on disk, a String, a byte[], or other user-defined implementation).

In operation, the unicast distribution of announcements can be done via a client polling and pulling technique, or a push-to-client technique. In the poll-pull technique, as will be explained in greater detail below, the receiving device polls the messaging framework for desired announcements at certain times. The messaging framework will return a list of available announcements. The receiving device can then pull any associated files from the application repository 112. In the push technique, as will be explained in greater detail below, the server pushes announcements to the receiving devices at a rate constrained by configured bandwidth limit.

As noted above, in some embodiments, a messaging framework 100according to the present invention will simultaneously support both multicast and unicast sending of announcements. In such embodiments, the system may be configured such that either can be switched off. When both are enabled, the unicast push mechanism can be switched off to save bandwidth. In some embodiments, a network operator may also have the option to tune the amount of bandwidth used by the push mechanism and the MDC data carousel by adjusting the repetition rates of announcements.

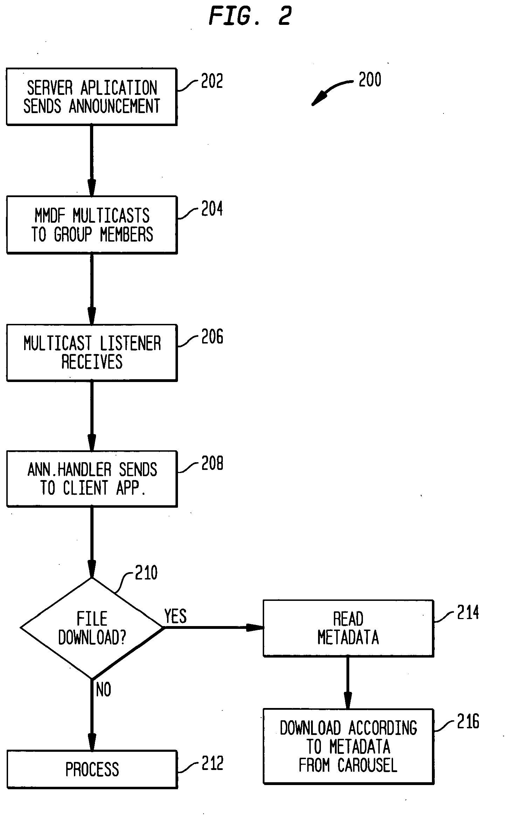

Operation of the multicast mode is illustrated with reference to FIG. 2, in which a flowchart 200 illustrating operation of embodiment of the present invention is shown. The particular arrangement of elements in the flowchart 200 is not meant to imply a fixed order to the elements; embodiments can be practiced in any order that is practicable.

In a process step 202, a server-side application 114 sends an announcement to the sMF control unit 106. As discussed above, such an announcement can include messages related to operator-to-client issues, or files, etc. In a process step 204, the MMDDF 108 or sMF 106 determines that multicast is available and multicasts the announcement to group members. In a process step 206, a client device's multicast listener 120 receives the announcement. In a step 208, the announcement handler 116 sends the announcement to the client application 122, if the application has registered to receive it. In a process step 210, the client determines if a file is attached/included. If not, the client 122 will process the announcement, in a process step 212. Otherwise, however, in a process step 214, the client application 122 will read the announcement metadata for MDC information, such as, e.g., address, port, file block size, number of blocks, digest, and digest algorithm. This information is used in a process step 216 to download the file(s).

Operation of the unicast modes is illustrated with reference to FIG. 3A and FIG. 3B. In particular, as noted above, the unicast methods are implemented if multicast is not available. In particular, as will be explained in greater detail below, a poll-pull technique and a push technique may be used. The unicast push technique may preferably be used in the case of transmission of relatively urgent messages.

Turning now to FIG. 3A, a flowchart 300 illustrating operation of embodiment of the present invention is shown. The particular arrangement of elements in the flowchart 300 is not meant to imply a fixed order to the elements; embodiments can be practiced in any order that is practicable. In particular, FIG. 3A illustrates the poll-pull technique of the present invention.

In a process step 302, a client polls the messaging framework. In particular, the client application 122 can register to have the unicast listener poll the sMF 102. The poll message can include, for example, an authentication and a list of the announcements the client 122 has received since the last poll. In a process step 304, the sMF's UMDDF 110 sends a list of pending announcements. In a process step 306, the pending announcements can be downloaded to the client. Files can be received, e.g., via an URL to the application repository.

Turning now to FIG. 3B, a flowchart 350 illustrating operation of embodiment of the present invention is shown. The particular arrangement of elements in the flowchart 350 is not meant to imply a fixed order to the elements; embodiments can be practiced in any order that is practicable. In particular, FIG. 3B illustrates the unicast push technique of the present invention.

In a process step 352, the sMF 106 identifies a push message. In a process step 354, the sMF accesses or reads a list of target devices. In a process step 356, the sMF serially transmits the announcement to the listed targets. This may be repeated a preconfigured number of times.

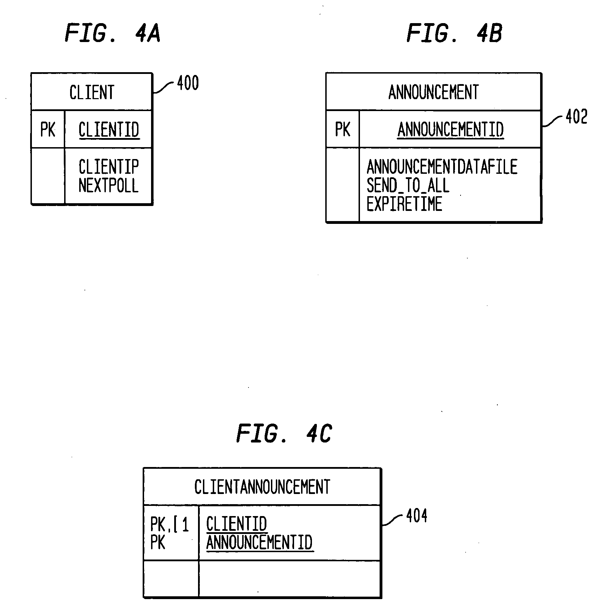

Operation of the unicast modes of specific embodiments of the present invention may be explained in greater detail with reference to the tables of FIG. 4A-FIG. 4C. In particular, shown in FIG. 4A is a client table 400 that is indexed by client ID and identifies a client to which a message is to be sent and a time of polling associated therewith. Shown in FIG. 4B is an announcement table 402 that is indexed by announcement-id and identifies an associated data file, an expiration time, and which devices are to receive the announcement (e.g., whether the announcement is to be sent to all user devices). FIG. 4C illustrates a linkage table 404 which identifies pending announcements.

In some embodiments, the messaging framework 100persistently stores in a database all announcements and a list of client Ids 400 to which they must be sent. The client Ids may be mapped to IP addresses using a local cache of the ACS database (not shown). The cache is kept up to date by a polling thread from the messaging framework to the ACS.

The client receiving device 104 keeps track of which announcements it has received since its last poll. These can be unicast pushed or pulled announcements, as well as multicast announcements. When the client polls the messaging framework sMF 106, the client will report this list of recently completed announcements. The messaging framework updates its tables and responds with any newer pending announcements.

When an announcement is added without a target list (in case of multicast), for each entry in the client table 400, an entry in the linkage table 404 is added. This processing may be done in multiple batches so as not to block database access. It is noted that a possibility exists that a race condition could occur when the sMF 106 is still processing the batches and a client comes polling, whose new record is not yet written in the database. However, since the sMF is in charge of giving the receiving devices the timestamp for when to return polling, it can take this possibility into account.

Receiving devices that have not yet pulled from the server 102 will not be present in the client table 400. To solve this, once an unknown receiving device pulls, the messaging framework will add an entry into the linkage table 404 for each announcement that was received without a target list. For this reason, the column send_to_all is used.

In the poll-pull technique, the client polls the messaging framework 102 at certain times as specified by the messaging framework 102 on the last poll. If its user interface (not shown) is not active, it will wait for the user interface to activate until the poll is sent. The polling may be done by sending client authentication information and the list of announcement-ids that it retrieved since the last poll action. These announcement-ids can be received by both unicast and multicast.

Whenever the messaging framework gets a poll from a client, it will remove all entries in the linkage table 404 that were notified to be already retrieved, remove all entries from the announcement table 402 that are expired, and then return a list of announcements that remain in the linkage table 404. This list is then sent in the response message, together with a time instance for when the next poll is to be scheduled. Because the messaging framework is in control of this time instance, it can load-balance its amount of traffic equally over time.

In the timeframe between this poll action, and the next-poll time instance, the client will be allowed a configurable number of poll actions, These actions can be triggered by a reboot, a UI opening or a UI refresh action. The reason for restricting the number of times a client can poll is to prevent a denial of service attack wherein a rogue client can repeatedly poll at a very high rate.

An announcement is pushed by the messaging framework when this is indicated by the server application. This can, for example, be used to send time critical notifications to a series of users. The messaging framework 102 will sequentially send out the announcement to the list of targets related to the announcement. A target must contain a client-ID. If no targets are specified, the messaging framework will not send out the announcement to anyone. If an application 114 wants to send announcements to all users, it should employ the multicast interface. The announcement sent to the receiving device will contain the client ID in order to detect if the announcement was really intended for the particular device (IP addresses on receiving devices may change).

In certain embodiments, the repetition rate of the sequences, and the number of times an announcement is sent in a given sequence, may be specified. This repeated sending on one timestamp is to take into account the possibility of message loss in UDP.

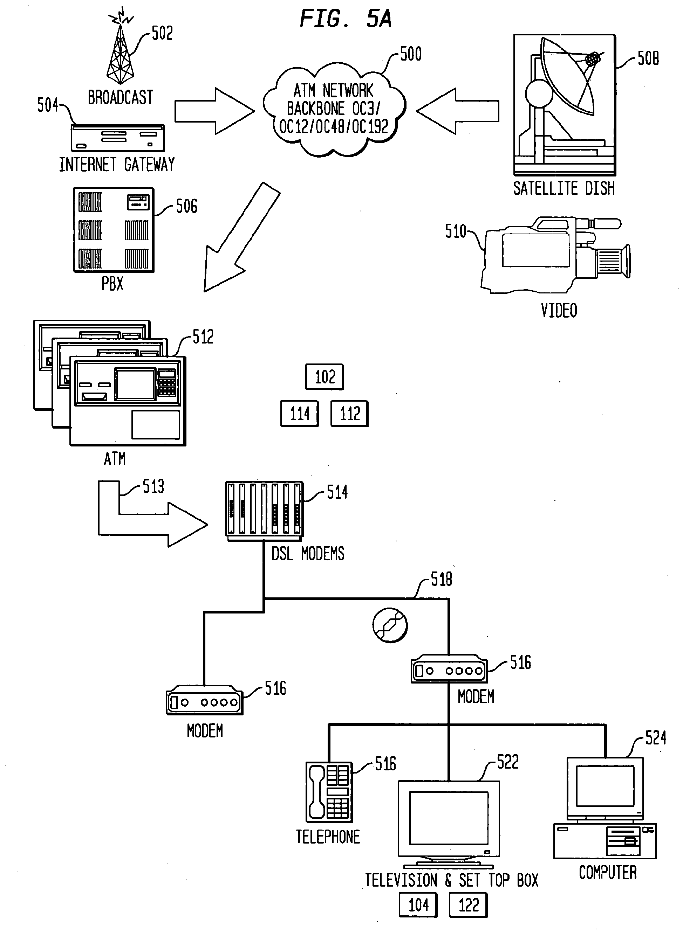

As discussed above, embodiments of the present invention are suited to an internet protocol media distribution system. FIG. 5A depicts a representative environment according to the invention. Central to FIG. 5A is a network with ATM network backbone 500. This ATM network is capable of fiber data rates of OC3, OC12, OC48, OC192 or as is available in the art. A plurality of content providers place information onto ATM network 500. Typical sources of content served include broadcast information 502, Internet information 504, telenetwork 506, broadcast content 508, and video 510.

In a representative central plant, a plurality of ATM switches 512 interface with network 500 to receive and distribute data from the various content sources. A server side messaging framework 102 as well as application(s) 114 and repository 112, in accordance with embodiments of the present invention may be located upnetwork from the end user. Information flows from ATM switches 512 via a plurality of paths 513 to a plurality of DSL modems 514. DSL modems 514 connect via DSL twisted pair lines 518 to a plurality of modems 516 in various subscribers residences or establishments. From a representative modem 516, there can be attached a telephone 520 and/or a television set 108 which may include and associated set top box 522, and/or a computer 524. The client side messaging framework 104 and client applications 122 of embodiments of the present invention may thus be operable on or in association with devices such as telephone 520, television with set top box 522, and/or computer 524.

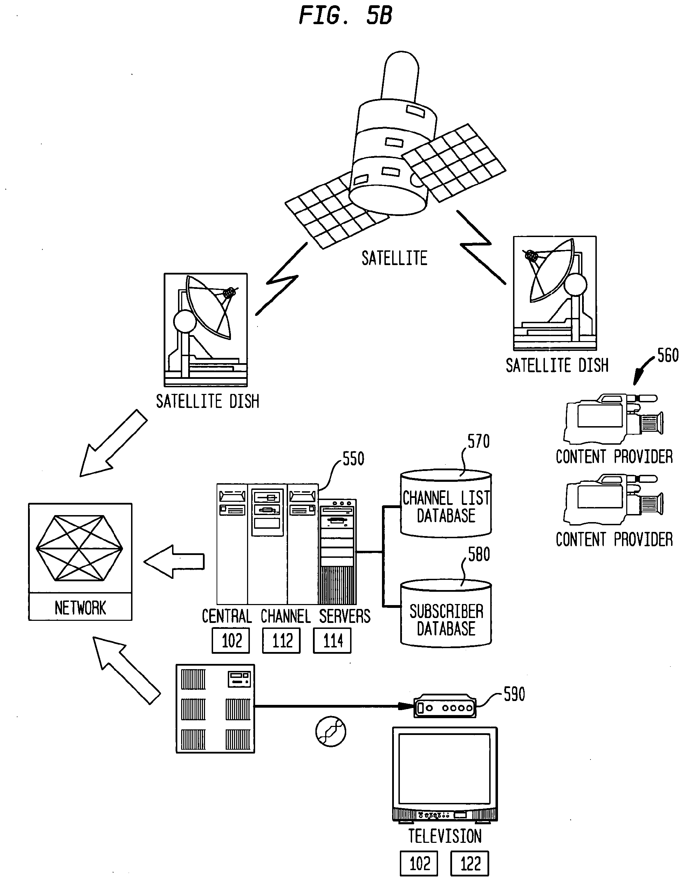

FIG. 5B depicts an overview of a digital programming content distribution system according to a particular embodiment of the present invention. One or more central channel server(s) 580, which may implement the messaging framework 102, server-side applications 114, and repository 112, described herein, collect(s) information about available programming services distributed from a multiplicity of content providers 560. In a preferable embodiment, this information is multicast by the content providers. Channel server 580 maintains a channel list database 570 which tracks available content channel offerings and a subscriber database 580, which contains subscriber identifications and permitted channels for each subscriber. Subscribers interact with central channel server 580 to obtain programming content information, and with content providers 560 to obtain programs. The messaging framework 102 may be implemented as part of or in conjunction with the central channel servers 550. Alternatively, the messaging framework 102 may be implemented in conjunction with the central office. In related embodiments, the channel server 580 and content providers 560 may be co-located on the same machine, or may reside on separate machines. Further, as noted above, the television with set top box 590 may implement the client side messaging framework 104 and applications 122.

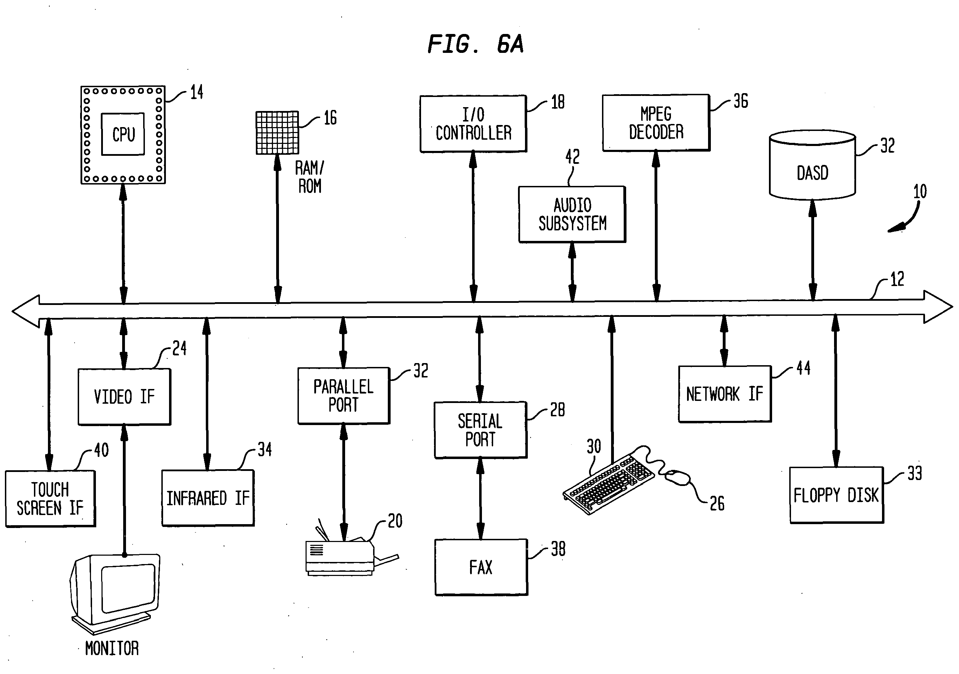

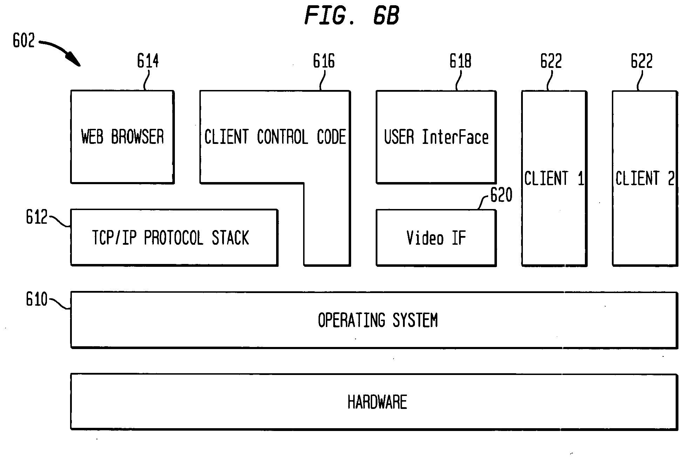

In a representative embodiment, the invention may be practiced using a control system with the basic subsystems and functions depicted in FIG. 6A. In particular, the control unit of FIG. 6A represents, for example, a client device, such as a set top box for implementing the client side messaging framework, or a server for implementing the server side.

In the representative system of FIG. 6A, a set top or control unit 10 includes bus 12, which is shown schematically as a single bus, but can also be a number of buses such as a local bus and one or more expansion buses (e.g., ADB, SCSI, ISA, EISA, MCA, NuBus, or PCI), which interconnect subsystems such as a central processor 14, which may be an 80x89, 98xxx, RISC, Pentium family, or other suitable microprocessor family, system memory 19, which may be RAM, ROM, or a combination thereof, input/output (I/O) controller 18, an external device such as a serial port 28, such as a USB port, and parallel port 32, detachable keyboard 30, mouse 29, fixed disk drive 32, which may be a hard disk drive or an optical drive or a CD-ROM or DVD-ROM drive or other suitable medium; and a floppy disk drive 33 operative to receive a floppy disk.

Network connections are usually established through one or more network adapters 44 attached to one of the buses or a modem on a serial port. Network adapters may include 10 Base T, 100 Base T, optical, ATM, DSL, or other network formats.

MPEG decoder 39 and audio subsystem 42 coupled via bus 12 provide multimedia capability. Many other devices can be connected such as fax 38 connected via serial port 28, touch screen 40 connected directly, infrared peripheral support 34 or printer 20, connected through parallel port 22. Other devices or subsystems (not shown) may be connected in a similar manner. Also, it is not necessary for all of the devices shown in FIG. 6A to be present to practice the invention. The devices and subsystems may be interconnected in different ways from that shown in FIG. 6A without impairing the operation of the system. Source code to implement processing functions in accordance with the present invention may be operably disposed in system memory 16 or stored on storage media such as fixed disk 32 or floppy disk 33.

Video interface 33 may be any standard video format, such as S-video. Various forms of user input devices may be used with the set top box and/or IRS. For example, a touch screen allows a user to point to objects on the screen to select the object and to move the selected object by pointing to a second position on the screen. Alternatively, an infrared or other coupled handheld control unit may be interfaced with the unit allowing the user to interact with the unit, make changes, and indicate preferences. Various buttons and controls may be displayed on the screen for activation by using the mouse, touch screen, or a remote control via infrared IF 34.

Operatively disposed in memory 19, or resident on fixed disk 32, operating system software may be PSOS, DOS, UNIX, WINDOWS95, WINDOWS CE, WINDOWS XP, or other operating systems known in the art. Executing concurrently and cooperatively with operating system software 710 (FIG. 7B), IP Multicast capable TCP/IP software 712 manages the flow of information into and out of the control unit over the network interface 44. A JAVA enabled Internet browser 714, such as Netscape Navigator Microsoft Explorer or their equivalent in the art provide a web-browser user interface to networked resources through TCP/IP software 712.

Client control code 619 implements functions specific to the set top box or server operation, such as the processes depicted herein. Output is provided by user interface 618 in conjunction with Video Interface Code 620. Other clients 622 such as Email, facsimile, video conferencing applications or voice mail may also be supported.

In a related embodiment, the functions of the set top unit are integrated into a television, forming an Internet capable, interactive "Smart Television." In a related embodiment, the functions of the set top unit are integrated into a personal computer, forming an Internet: capable, interactive "Workstation Television."

As used herein, whether in the above description or the following claims, the terms "comprising," "including," "carrying," "having," "containing," "involving," and the like are to be understood to be open-ended, that is, to mean including but not limited to. Only the transitional phrases "consisting of" and "consisting essentially of," respectively, shall be considered exclusionary transitional phrases, as set forth, with respect to claims, in the United States Patent Office Manual of Patent Examining Procedures (Eighth Edition, August 2001 as revised October 2005), Section 2111.03.

Any use of ordinal terms such as "first," "second," "third," etc., in the claims to modify a claim element does not by itself connote any priority, precedence, or order of one claim element over another, or the temporal order in which acts of a method are performed. Rather, unless specifically stated otherwise, such ordinal terms are used merely as labels to distinguish one claim element having a certain name from another element having a same name (but for use of the ordinal term).

## Claims

1. A method, **characterized by**:
providing interfaces to applications (114) to send announcements, wherein each of said announcements either completely embeds a message or refers to a message, that is accessible separately, including in each of said announcements a reference to a file for downloading, coupling to an application repository (112), where said files are stored for download, specifying whether each of said announcements is to be sent via multicast or via unicast transmitting said announcements to a plurality of user devices (520, 522, 524) using multicast transmission and/or using a unicast transmission, wherein a client side messaging network (104) implemented on each of the user devices (520, 522, 524) provides interfaces to listeners on each of said plurality of said user devices (520, 522, 524) to register interest in announcements, to receive said announcements and to forward said announcements to interested client applications (122), wherein each of said plurality of said user devices (520, 522, 524) is adapted to acquire download information for a multicast data carousel (126) used to deliver said files over multicast based on metadata inside said announcements,
wherein each of said plurality of said user devices (520, 522, 524) is adapted to fall back on unicast download, in case a fallback unicast download location is provided and multicast download fails, wherein each of said plurality of said user devices (520, 522, 524) is adapted to keep track of which of said announcements it has received and to report a list of recently completed announcements keeping track of said announcements;
determining that a multicast download for a download of one or more of said files is unavailable; and providing a unicast alternative for the download if the multicast download is unavailable on the basis of said announcement track.

2. A method in accordance with claim 1, said unicast alternative comprising a poll-pull alternative.

3. A method in accordance with claim 1 or 2, said unicast alternative comprising a push alternative.

4. A system comprising:
a network (500);
a plurality of user devices (520, 522, 524)
operably coupled to the network; and
a server (102) operably coupled to the network **characterized in that**
said server (102) is configured to transmit one or more announcements and files to said plurality of said user devices (520, 522, 524) using multicast transmission and/or
using a unicast transmission, wherein each of said announcements either completely embeds a message or refers to a message, that is accessible separately,
said server (102) is adapted to provide interfaces to applications (114) to send said announcements, said server (102) is adapted to specify whether each of said announcements is to be sent via multicast or via unicast,
each of said plurality of said user devices (520, 522, 524) implements a client side messaging network (104) which provides interfaces to listeners on each of said plurality of said user devices (520, 522, 524) to register interest in said announcements, to receive said announcements and to forward said announcements to interested client applications (122),
said server (102) is coupled to an application repository (112), where said files are stored for download,
each of said plurality of said user devices (520, 522, 524) is adapted to acquire download information for a multicast data carousel (126) used to deliver one of said files over multicast based on metadata inside at least one of said announcements, wherein said at least one of said announcements includes reference to said one of said files for downloading, each of said plurality of said user devices (520, 522, 524) is adapted to fall back on unicast download, in case a fallback unicast download location is provided and multicast download fails, each of said plurality of said user devices (520, 522, 524) is adapted to keep track of which of said announcements it has received and to report a list of recently completed announcements.

5. A system in accordance with claim 4, **characterized in that** said unicast transmission comprises a poll-pull transmission.

6. A system in accordance with claim 4 or 5, **characterized in that** said unicast transmission comprises a push transmission.

7. A system in accordance with claim 5 or 6,
**characterized in that** said server (102) is configured to specify said push transmission or poll-pull transmission.

8. A system in accordance with claim 6, **characterized in that** said push transmission comprises said server (102) transmitting one or more files to each of the plurality of user devices in a serial fashion.

9. A system in accordance with any of claims 4 to 8, **characterized in that**
said plurality of user devices (522) are configured to receive one or more video streams; wherein said server (102) transmits one or more files to said plurality of user devices (522) in a multicast transmission and, if multicast transmission is not available, in a plurality of unicast transmissions.

10. A system in accordance with claim 9, **characterized in that** said plurality of unicast transmissions comprise serial transmissions of one or more files to said plurality of user devices (522) while an event is active.

11. A system in accordance with claim 9 or 10, **characterized in that** said plurality of unicast transmissions comprise serial transmissions of one or more files to said plurality of user devices (522) after a polling to retrieve a list of new files since previous polling.

12. A system in accordance with any of claims 4 to 11, **characterized in that** said plurality of user devices (522) comprise Internet Protocol television receivers.

## Patentansprüche

1. Verfahren, **gekennzeichnet durch**:
Bereitstellen von Schnittstellen für Anwendungen (114) zum Senden von Ankündigungen, wobei jede der Ankündigungen entweder eine Nachricht vollständig einbettet oder auf eine Nachricht verweist, die gesondert zugänglich ist, wobei in jeder der Ankündigungen ein Verweis auf eine Datei zum Downloaden enthalten ist, Koppeln mit einem Anwendungs-Repository (112), in dem die Dateien zum Downloaden gespeichert sind, Festlegen, ob jede der Ankündigungen über Multicast oder über Unicast gesendet werden soll, Übertragen der Ankündigungen an eine Vielzahl von Benutzergeräten (520, 522, 524) unter Verwendung einer Multicast-Übertragung und/oder unter Verwendung einer Unicast-Übertragung, wobei ein clientseitiges Nachrichtenübermittlungsnetzwerk (104), das auf jedem der Benutzergeräte (520, 522, 524) implementiert ist, Listenern Schnittstellen auf jedem der Vielzahl der Benutzergeräte (520, 522, 524) bereitstellt, um das Interesse an Ankündigungen aufzunehmen, die Ankündigungen zu empfangen und die Ankündigungen an interessierte Clientanwendungen (122) weiterzuleiten, wobei jedes der Vielzahl der Benutzergeräte (520, 522, 524) dazu vorgesehen ist, eine Downloadinformation für ein Multicast-Datenkarussell (126) zu erfassen, das verwendet wird, um die Dateien über Multicast basierend auf Metadaten innerhalb der Ankündigungen zuzustellen,
wobei jedes der Vielzahl der Benutzergeräte (520, 522, 524) dazu vorgesehen ist, auf einen Unicast-Download auszuweichen, sofern ein Ausweich-Unicast-Downloadspeicherort bereitgestellt wird und ein Multicast-Download fehlschlägt, wobei jedes der Vielzahl der Benutzergeräte (520 522, 524) dazu vorgesehen ist, nachzuverfolgen, welche der Ankündigungen es empfangen hat, und eine Liste von kürzlich abgeschlossenen Ankündigungen zu melden, Nachverfolgen der Ankündigungen;
Bestimmen, dass ein Multicast-Download für einen Download von einer oder mehreren der Dateien nicht verfügbar ist; und Bereitstellen einer Unicast-Alternative für den Download, wenn der Multicast-Download auf der Grundlage der Ankündigungsnachverfolgung nicht verfügbar ist.

2. Verfahren nach Anspruch 1, wobei die Unicast-Alternative eine Poll-Pull-Alternative umfasst.

3. Verfahren nach Anspruch 1 oder 2, wobei die Unicast-Alternative eine Push-Alternative umfasst.

4. System, umfassend:
ein Netzwerk (500);
eine Vielzahl von Benutzergeräten (520, 522, 524), die betriebsfähig mit dem Netzwerk verbunden sind; und
einen Server (102), der betriebsfähig mit dem Netzwerk verbunden ist, **dadurch gekennzeichnet, dass** der Server (102) konfiguriert ist, um eine oder mehrere Ankündigungen und Dateien an die Vielzahl der Benutzergeräte (520, 522, 524) unter Verwendung einer Multicast-Übertragung und/oder unter Verwendung einer Unicast-Übertragung zu übertragen, wobei jede der Ankündigungen entweder eine Nachricht vollständig einbettet oder auf eine Nachricht verweist, die gesondert zugänglich ist,
wobei der Server (102) dazu vorgesehen ist, Anwendungen (114) Schnittstellen bereitzustellen, um die Ankündigungen zu senden, wobei der Server (102) dazu vorgesehen ist, um festzulegen, ob jede der Ankündigungen über Multicast oder über Unicast gesendet werden soll,
wobei jede der Vielzahl der Benutzergeräte (520, 522, 524) ein clientseitiges Nachrichtenübermittlungsnetzwerk (104) implementiert, das Listenern Schnittstellen auf jedem der Vielzahl der Benutzergeräte (520, 522, 524) bereitstellt, um das Interesse an Ankündigungen aufzunehmen, die Ankündigungen zu empfangen und die Ankündigungen an interessierte Clientanwendungen (122) weiterzuleiten,
wobei der Server (102) mit einem Anwendungs-Repository (112) gekoppelt ist, in dem die Dateien für den Download gespeichert sind,
wobei jedes der Vielzahl der Benutzergeräte (520, 522, 524) dazu vorgesehen ist, eine Downloadinformation für ein Multicast-Datenkarussell (126) zu erfassen, das verwendet wird, um eine der Dateien über Multicast basierend auf Metadaten innerhalb mindestens einer der Ankündigungen zuzustellen, wobei die mindestens eine der Ankündigungen einen Verweis auf die eine der Dateien zum Downloaden enthält, wobei jedes der Vielzahl der Benutzergeräte (520, 522, 524) dazu vorgesehen ist, auf einen Unicast-Download auszuweichen, sofern ein Ausweich-Unicast-Downloadspeicherort bereitgestellt wird und ein Multicast-Download fehlschlägt, wobei jedes der Vielzahl der Benutzergeräte (520 522, 524) dazu vorgesehen ist, nachzuverfolgen, welche der Ankündigungen es empfangen hat, und eine Liste von kürzlich abgeschlossenen Ankündigungen zu melden.

5. System nach Anspruch 4, **dadurch gekennzeichnet, dass** die Unicast-Übertragung eine Poll-Pull-Übertragung umfasst.

6. System nach Anspruch 4 oder 5, **dadurch gekennzeichnet, dass** die Unicast-Übertragung eine Push-Übertragung umfasst.

7. System nach Anspruch 5 oder 6,
**dadurch gekennzeichnet, dass** der Server (102) konfiguriert ist, um die Push-Übertragung oder die Poll-Pull-Übertragung festzulegen.

8. System nach Anspruch 6, **dadurch gekennzeichnet, dass** die Push-Übertragung umfasst, dass der Server (102) eine oder mehrere Dateien seriell zu jedem der Vielzahl von Benutzergeräten überträgt.

9. System nach einem der Ansprüche 4 bis 8, **dadurch gekennzeichnet, dass**
die Vielzahl von Benutzergeräten (522) konfiguriert ist, um einen oder mehrere Videoströme zu empfangen; wobei der Server (102) eine oder mehrere Dateien an die Vielzahl von Benutzergeräten (522) in einer Multicast-Übertragung und, wenn keine Multicast-Übertragung verfügbar ist, in einer Vielzahl von Unicast-Übertragungen überträgt.

10. System nach Anspruch 9, **dadurch gekennzeichnet, dass** die Vielzahl von Unicast-Übertragungen serielle Übertragungen von einer oder mehreren Dateien an die Vielzahl von Benutzergeräten (522) umfasst, während ein Ereignis aktiv ist.

11. System nach Anspruch 9 oder 10, **dadurch gekennzeichnet, dass** die Vielzahl von Unicast-Übertragungen serielle Übertragungen von einer oder mehreren Dateien an die Vielzahl von Benutzergeräten (522) nach einem Poll zum Abrufen einer Liste neuer Dateien seit dem vorherigen Poll umfassen.

12. System nach einem der Ansprüche 4 bis 11, **dadurch gekennzeichnet, dass** die Vielzahl von Benutzergeräten (522) Internetprotokoll-Fernsehempfänger umfassen.

## Revendications

1. Procédé, **caractérisé par** :
la fourniture d'interfaces à des applications (114) pour envoyer des notifications, dans lequel chacune desdites notifications soit intègre complètement un message, soit se réfère à un message, lequel message est accessible séparément ;
l'inclusion, dans chacune desdites notifications, d'une référence à un fichier pour un téléchargement ;
le couplage à un référentiel d'applications (112), référentiel d'applications dans lequel lesdits fichiers sont stockés pour un téléchargement ;
la spécification de si chacune desdites notifications doit être envoyée via une transmission par multidiffusion ou via une transmission par envoi individuel ;
la transmission desdites notifications à une pluralité de dispositifs d'utilisateur (520, 522, 524) en utilisant une transmission par multidiffusion et/ou en utilisant une transmission par envoi individuel ; dans lequel :
un réseau de messagerie électronique de côté de client (104) qui est mis en oeuvre sur chacun des dispositifs d'utilisateur (520, 522, 524) fournit des interfaces à des auditeurs sur chacun de ladite pluralité desdits dispositifs d'utilisateur (520, 522, 524) afin d'enregistrer l'intérêt porté à des notifications, afin de recevoir lesdites notifications et afin de transférer lesdites notifications à des applications de client intéressées (122) ; dans lequel :
chacun de ladite pluralité desdits dispositifs d'utilisateur (520, 522, 524) est adapté de manière à ce qu'il acquière une information de téléchargement pour un carrousel de données de multidiffusion (126) qui est utilisé pour délivrer lesdits fichiers par multidiffusion sur la base de métadonnées à l'intérieur desdites notifications ; dans lequel :
chacun de ladite pluralité desdits dispositifs d'utilisateur (520, 522, 524) est adapté de manière à ce qu'il se replie sur un téléchargement par envoi individuel, dans le cas où un site de téléchargement par envoi individuel de repli est prévu et où un téléchargement par multidiffusion est en échec ; dans lequel :
chacun de ladite pluralité desdits dispositifs d'utilisateur (520, 522, 524) est adapté de manière à ce qu'il garde une trace de celles desdites notifications qu'il a reçues et de manière à ce qu'il rapporte une liste de notifications diffusées récemment qui garde une trace desdites notifications ;
la détermination du fait qu'un téléchargement par multidiffusion pour un téléchargement d'un ou de plusieurs desdits fichiers est non disponible ; et
la fourniture d'une alternative par envoi individuel pour le téléchargement si le téléchargement par multidiffusion est non disponible sur la base de ladite trace de notifications.

2. Procédé selon la revendication 1, ladite alternative par envoi individuel comprenant une alternative par interrogation-extraction ou "poll-pull".

3. Procédé selon la revendication 1 ou 2, ladite alternative par envoi individuel comprenant une alternative par transmission automatique ou "push".

4. Système comprenant :
un réseau (500) ;
une pluralité de dispositifs d'utilisateur (520, 522, 524) qui sont couplés en termes de fonctionnement au réseau ; et
un serveur (102) qui est couplé en termes de fonctionnement au réseau ;
**caractérisé en ce que** :
ledit serveur (102) est configuré de manière à ce qu'il transmette un(e) ou plusieurs notification(s) et fichier(s) à ladite pluralité desdits dispositifs d'utilisateur (520, 522, 524) en utilisant une transmission par multidiffusion et/ou en utilisant une transmission par envoi individuel ; dans lequel :
chacune desdites notifications soit intègre complètement un message, soit se réfère à un message, lequel message est accessible séparément ;
ledit serveur (102) est adapté de manière à ce qu'il fournisse des interfaces à des applications (114) pour envoyer lesdites notifications ;
ledit serveur (102) est adapté de manière à ce qu'il spécifie si chacune desdites notifications doit être envoyée via une transmission par multidiffusion ou via une transmission par envoi individuel ;
chacun de ladite pluralité desdits dispositifs d'utilisateur (520, 522, 524) met en oeuvre un réseau de messagerie électronique de côté de client (104) qui fournit des interfaces à des auditeurs sur chacun de ladite pluralité desdits dispositifs d'utilisateur (520, 522, 524) afin d'enregistrer l'intérêt porté auxdites notifications, afin de recevoir lesdites notifications et afin de transférer lesdites notifications à des applications de client intéressées (122) ;
ledit serveur (102) est couplé à un référentiel d'applications (112), référentiel d'applications dans lequel lesdits fichiers sont stockés pour un téléchargement ;
chacun de ladite pluralité desdits dispositifs d'utilisateur (520, 522, 524) est adapté de manière à ce qu'il acquière une information de téléchargement pour un carrousel de données de multidiffusion (126) qui est utilisé pour délivrer l'un desdits fichiers par multidiffusion sur la base de métadonnées à l'intérieur d'au moins l'une desdites notifications ; dans lequel :
ladite au moins une desdites notifications inclut une référence audit un desdits fichiers pour un téléchargement ;
chacun de ladite pluralité desdits dispositifs d'utilisateur (520, 522, 524) est adapté de manière à ce qu'il se replie sur un téléchargement par envoi individuel, dans le cas où un site de téléchargement par envoi individuel de repli est prévu et où un téléchargement par multidiffusion est en échec ;
chacun de ladite pluralité desdits dispositifs d'utilisateur (520, 522, 524) est adapté de manière à ce qu'il garde une trace de celles desdites notifications qu'il a reçues et de manière à ce qu'il rapporte une liste de notifications diffusées récemment.

5. Système selon la revendication 4, **caractérisé en ce que** ladite transmission par envoi individuel comprend une transmission par interrogation-extraction ou "poll-pull".

6. Système selon la revendication 4 ou 5, **caractérisé en ce que** ladite transmission par envoi individuel comprend une transmission automatique ou "push".

7. Système selon la revendication 5 ou 6, **caractérisé en ce que** ledit serveur (102) est configuré de manière à ce qu'il spécifie ladite transmission automatique ou "push" ou ladite transmission par interrogation-extraction ou "poll-pull".

8. Système selon la revendication 6, **caractérisé en ce que** ladite transmission automatique ou "push" comprend le fait que ledit serveur (102) transmet un ou plusieurs fichier(s) à chacun de la pluralité de dispositifs d'utilisateur d'une façon en série.

9. Système selon l'une quelconque des revendications 4 à 8, **caractérisé en ce que** les dispositifs d'utilisateur de ladite pluralité de dispositifs d'utilisateur (522) sont configurés de manière à ce qu'ils reçoivent un ou plusieurs flux de données vidéo ; dans lequel ledit serveur (102) transmet un ou plusieurs fichier(s) à ladite pluralité de dispositifs d'utilisateur (522) selon une transmission par multidiffusion et, si une transmission par multidiffusion n'est pas disponible, selon une pluralité de transmissions par envoi individuel.

10. Système selon la revendication 9, **caractérisé en ce que** les transmissions de ladite pluralité de transmissions par envoi individuel comprennent des transmissions série d'un ou de plusieurs fichier(s) à ladite pluralité de dispositifs d'utilisateur (522) tandis qu'un événement est actif.

11. Système selon la revendication 9 ou 10, **caractérisé en ce que** les transmissions de ladite pluralité de transmissions par envoi individuel comprennent des transmissions série d'un ou de plusieurs fichier(s) à ladite pluralité de dispositifs d'utilisateur (522) après une interrogation pour récupérer une liste de nouveaux fichiers depuis une interrogation précédente.

12. Système selon l'une quelconque des revendications 4 à 11, **caractérisé en ce que** les dispositifs de ladite pluralité de dispositifs d'utilisateur (522) comprennent des récepteurs de télévision de Protocole Internet.
